Europäisches Patentamt

(19) European Patent Office    (11) Publication number:    **0 054 395**

Office européen des brevets    **B1**

(12)    **EUROPEAN PATENT SPECIFICATION**

(45) Date of publication of patent specification: **29.01.86**    (51) Int. Cl.⁴: **B 26 F 1/24** // B21D28/34

(21) Application number: **81305772.6**

(22) Date of filing: **07.12.81**

(54) **Method and apparatus for perforating metal strip.**

(30) Priority: **09.12.80 GB 8039359**

(43) Date of publication of application:
**23.06.82 Bulletin 82/25**

(45) Publication of the grant of the patent:
**29.01.86 Bulletin 86/05**

(84) Designated Contracting States:
**DE FR SE**

(56) References cited:
**DE-B-1 801 260**
**GB-A-1 542 409**
**US-A-2 290 608**
**US-A-3 750 502**

(73) Proprietor: **Marathon Alcad Limited**
**Union Street**
**Redditch, Worcestershire, B98 7BW (GB)**

(72) Inventor: **Moffat, John Egginton**
**10 Berrill Close The Meadows**
**Droitwich, Worcestershire, WR9 7RG (GB)**

(74) Representative: **Jennings, Nigel Robin et al**
**KILBURN & STRODE 30 John Street**
**London WC1N 2DD (GB)**

Courier Press, Leamington Spa, England.

## Description

The present invention relates to a method and apparatus for perforating metal strip. Though not limited thereto, the invention is particularly concerned with the perforation of metal strip for use in the manufacture of pocket electrode plates for alkaline electric storage batteries. Such perforated strip is used to make rectangular or rounded section tubes or pockets which are then filled with electrochemically active material in the form of compacted powder and connected together to form a plate. The perforations are required to allow the electrolyte access to the active material. The rate at which the electrochemical reaction proceeds is related to the total open area of the perforations and it is therefore desirable to provide as large as possible an open area for the plates of those batteries which are required to produce a high discharge current, e.g. automotive batteries.

As mentioned above, the active material in pocket plates is in the form of a fine powder, and this powder therefore tends to fall out of the plate through the perforations. A certain amount of active material loss can be tolerated, but experience has shown that if the perforations exceed about 0.25 mm in diameter the degree of active material loss becomes unacceptable.

In practice it is desirable to maintain the diameter of the perforations as small as possible in order to minimise the active material loss and thus in order to maintain or increase the specific perforated area it is necessary to increase the number of perforations per unit area. In theory this might be achieved by using perforating needles having a smaller shank diameter, but it is found in practice that a diameter of about 0.5 mm is the optimum because below this value the needles are too fragile or tend to break or bend in use.

Conventionally, battery manufacturers perforate metal strip by advancing it incrementally through a perforating machine having a single set of needles secured to a holder which is reciprocated vertically to form sequential lines of perforations. Alternatively, the strip is passed between two rollers, one of which is toothed and the other of which is provided with grooves into which the teeth on the other roller may pass. This latter method is considerably faster, but both methods suffer from the disadvantage that the maximum open area that can be achieved is relatively low with the result that a battery incorporating such strip material may exhibit an unacceptably high depression of terminal voltage when delivering a high discharge current.

British Patent No. 1232122 discloses a method of perforating metal strip in which two sets of needles are arranged to reciprocate with respect to one another and thereby to perforate a strip of metal from both sides simultaneously, each set of needles acting as a die or support for the other. This machine enables the number of holes obtainable per unit area to be approximately doubled by comparison with the methods referred to above, that is to say the open area if approximately doubled but the area of the individual holes is not increased.

British Patent No. 1542409 discloses a method of perforating metal strip in which the strip is passed between two rotating rollers, each of which is toothed so that the teeth of one roller act as die for the teeth of the other roller. This method also enables the open perforated area to be approximately doubled and the perforation to be carried out very rapidly. However, in contrast to needles which produce uniform circular perforations, the teeth which are provided on perforating rollers are of necessity of chisel shape and therefore produce elongate perforations. Although the specific open area of strip perforated by needles or rollers may be very similar the perforations produced by rollers may exceed 0.25 mm in their longer dimension and the electrode plates made from such strip will therefore be subject to excessive active material loss.

In the methods disclosed in the two prior patent specifications referred to the strip is pierced from both sides, and the perforated strip therefore carries burrs on both surfaces. When such material is formed into electrode pockets burrs on the inside of the pockets may be advantageous since they will tend to enhance the retainment of the active material. However, burrs on the outside of the pockets are very disadvantageous since the burrs tend to get bent back into the holes thereby partially closing them and reducing the open area of the plate during the subsequent operations on the strip which include pressing. For this reason it has been previously necessary to grind the burrs away from one side of the strip before it could be used for the manufacture of electrode pockets.

It is an object of the present invention to provide a method and apparatus for perforating metal strip to produce a strip which has an extremely high open specific area and which is also suitable for use in making pocket plates for alkaline batteries without the necessity of removing the burrs from one side of the strip which is a time consuming and expensive task.

According to the present invention a method of perforating metal strip includes reciprocating a first array of needles to pierce the strip from one side and thereby form a series of first holes whilst supporting the strip from the other side adjacent the first holes and reciprocating a second array of needles to pierce the strip from the said one side and thereby form a series of second holes whilst supporting the strip from the other said side adjacent the second holes, the second holes being interposed amongst the first holes and offset from them and formed subsequent to the formation of the first holes amongst which they are interposed. The method is preferably carried out in a machine in which the first and second arrays of needles are reciprocated in synchronism and the strip is advanced incrementally past the needles between each perforating step.

The method in accordance with the present invention provides not only approximately double the open area as compared with the conventional method but also produces a strip having burrs on one side only due to the fact that it is pierced from one side only and thus can be used for the manufacture of pocket plates without an intervening grinding operation.

The needles of each array may be arranged in various different ways, but preferably they are so arranged and the strip is advanced by such a distance that the strip is formed with perforations in a quincunx configuration.

Preferably the strip is supported between adjacent holes, conveniently by die plates having a flat surface which supports the strip over an appreciable distance in the direction of its length. In the conventional needle perforation method the strip is supported on its side remote from the line of needles by die plates of circular section, the peripheries of which engage the strip at points intermediate those points where the strip is pierced. The periphery of the die plates is curved and can therefore only support the strip adequately at one point and when more than one row of needles is used distortion of the strip occurs about the periphery of the die plates. In the preferred embodiment of the present invention each array of needles comprises at least two parallel rows of needles and the distortion of the strip and possible misplacement of the perforations which may occur with circular die plates cannot be tolerated as the holes must be accurately spaced to avoid possible tearing of the strip and enlargement of the first perforations at the second perforating stage. The use of die plates having a flat surface provides uniform longitudinal support beneath the strip at both perforation stages and avoids the distortion which occurs around the periphery of the circular die plates. When the dies become worn or distorted they may be simply moved forwards or backwards along the line of the strip travel a small distance, to present an unworn portion of their upper surface.

The invention also embraces an apparatus for carrying out the method and thus according to a further aspect of the present invention apparatus for perforating metal strip includes a first array of needles, a second array of needles, means to reciprocate the first and second arrays of needles, advancing means to advance the strip incrementally through the apparatus and a plurality of support means associated with each array of needles adapted, in use, to contact the strip, the apparatus being constructed and arranged so that, in use, the first array of needles is reciprocated to pierce the strip from a first side and thereby form a series of first holes, whilst the other side of the strip is contacting the support means adjacent the first holes the strip is advanced and the second array of needles is reciprocated to pierce the strip from the first side and thereby form a second series of holes whilst the other side of the strip is contacting the support means adjacent the second holes, the second holes being interposed amongst the first holes and offset from them. The conventional needle perforating apparatus referred to above is a simple adaptation of a toggle press to effect the reciprocation of a set of needles which cooperates with a fixed die beneath the strip as the latter is pierced. Conversion of this apparatus to perforation of the strip simultaneously from both sides is rather complex, but conversion of it to apparatus in accordance with the present invention is found to be rapid and simple.

Preferably the first and second arrays of needles are connected to a common needle holder and adapted to be reciprocated in synchronism. In the most preferred construction both the first and second arrays of needles comprise one or more lines of needles extending transverse to the intended direction of movement of the strip, the needles of the two arrays and the advancing means being so arranged that, in use, the strip is formed with perforations in a quincunx configuration.

Preferably the support means comprises two sets of die plates, one set being associated with each array of needles, and arranged to contact the strip at points between the holes formed by the needles, the die plates extending in the intended direction of travel of the strip and being spaced apart in a direction transverse to the said intended direction, the die plates of one set being offset with respect to those of the other set in a direction transverse to the said intended direction.

Further preferred features and details of the invention will be apparent from the following description of one specific embodiment which is given by way of example with reference to the accompanying drawings in which:—

Figure 1 is a simplified schematic side elevation, partly in section of an apparatus for perforating metal strip;

Figure 2 is a diagrammatic plan view of the common needle holder;

Figure 3 is a diagrammatic plan view of the die bed;

Figure 4 is a side elevation of the die bed seen in Figure 3; and

Figure 5 is a diagrammatic view showing the resulting quincunx configuration of the perforations formed in the strip.

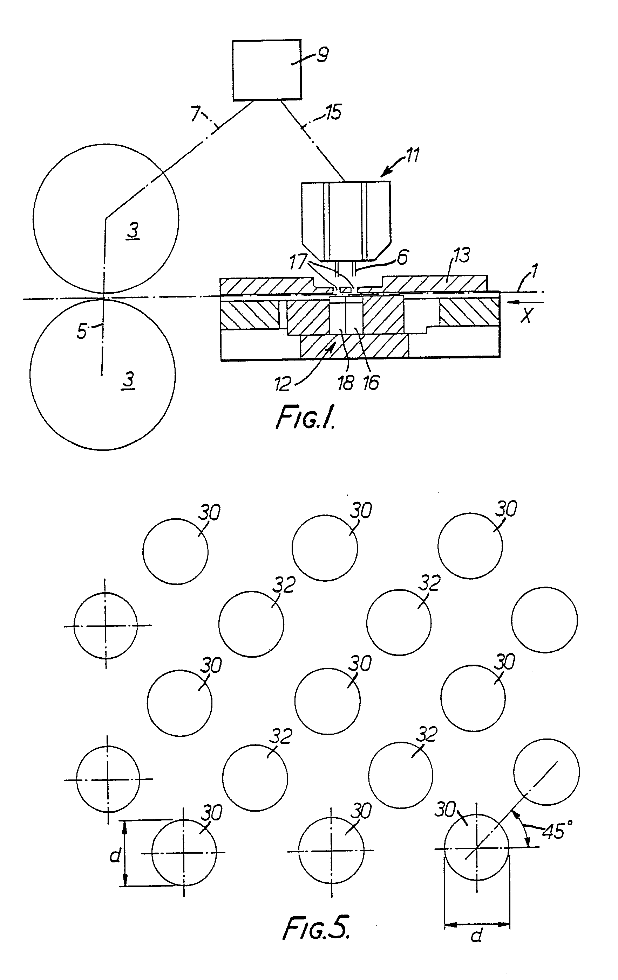

As seen generally in Figure 1, the apparatus comprises a die block 12 which includes two clusters of die plates and which together with a guide block 13 above it defines a pathway 1 for metal strip to be perforated. Situated downstream of the die block is an incremental advancing device comprising two feed rollers 3 connected together by a linkage diagrammatically indicated at 5 and to a drive motor 7 by a linkage designated 9. Above the die bed 12 is a common needle holder 11 holding two arrays of two parallel rows of needles 6 and connected by a linkage 15 to the motor 9 to cause it to reciprocate vertically. Below each array of needles 6 there is a slot 17 in the guide block 13 to permit the needles to pierce the metal strip below it.

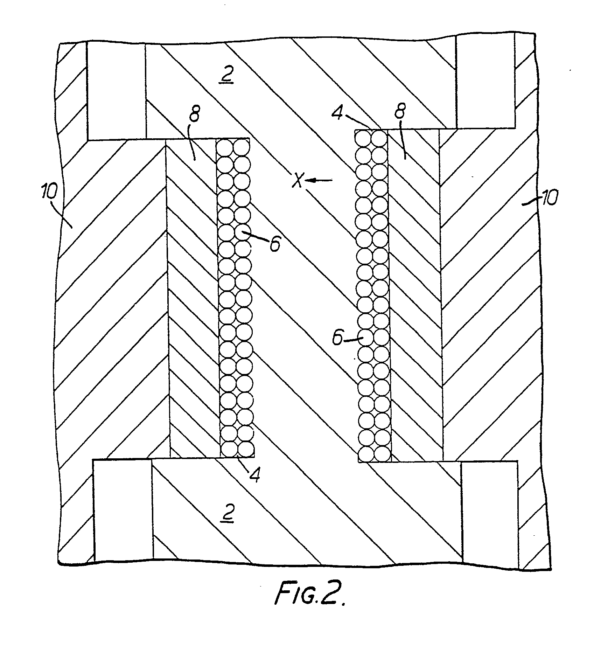

Referring now to Figure 2, the needle holder comprises a metallic block 2 in each side of which there is a rectangular section recess 4. Within each recess 4 is a needle array comprising two parallel abutting rows of needles 6, each row extending perpendicular to the intended direction of movement X of the strip to be perforated. The needles of the two rows of needles engaging the metallic block 2 are each received and thus located in a respective part-circular recess formed in the block 2. Each row of needles in the upstream array (i.e. the right as seen in Figure 1) contains 20 needles whilst the rows in the downstream array contain 19 needles. Each needle array is clamped rigidly in position by a respective clamping block 8 which is urged into contact with the needles 6 by a pressure plate 10 which is connected to the block 2 by bolts, not shown. The diameter of the shaft of each needle will be designated D, and the length of the upstream and downstream recesses 4 are precisely 20D and 19D respectively so that the two rows of needles of each array are in registry. However, one recess 4 is laterally offset from the other by a distance equal to 0.5D so that the geometric centres of the needles of one array are offset by a distance of 0.5D from the centres of the needles of the other array when viewed in the direction X. The downstream edge of the upstream needle array and the upstream edge of the downstream array are spaced apart in this case by 6.5D to ensure that the holder has sufficient mechanical strength. It will however be appreciated that this spacing may be any integer+0.5D, but 6.5D has been found appropriate for practical purposes.

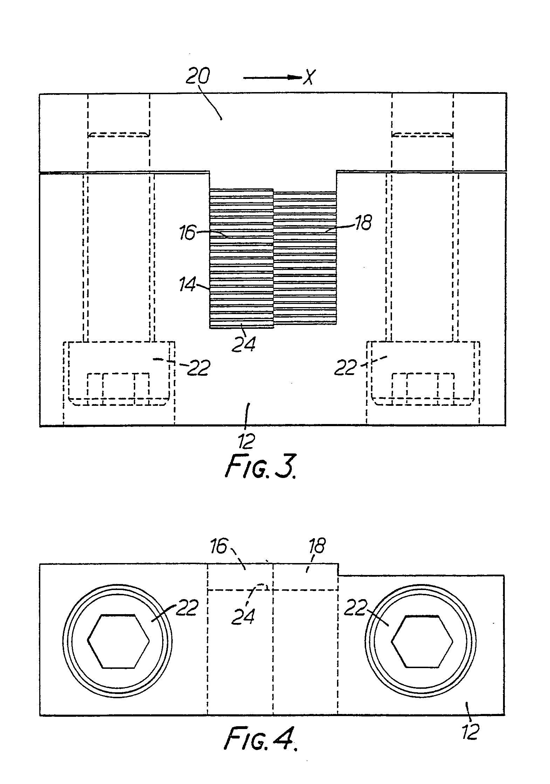

Referring now to Figures 3 and 4, the die bed comprises a die block 12 affording a rectangular recess 14 in which an upstream cluster of spaced die plates 16 and a downstream cluster of spaced die plates 18 are positively retained by a clamping die block 20 which is secured to the block 12 by two set screws 22. The die plates 16 extend parallel to the direction X and are positioned beneath the upstream array of needles 4. Each die plate has a step or portion of reduced height 24 ground in it and thus the cluster of die plates are seen from above as a plurality of flat elongate surfaces spaced apart by the portions of reduced height. The die plates each have a thickness of D. It will however be appreciated that a similar effect could be achieved by using thinner die plates 16 spaced apart by separate spacers clamped between them. The portions of reduced height 24 are positioned and dimensioned so that the needles of the upstream array can pass down into them. The die plates 18 are similarly arranged and also have portions of reduced height 24 so arranged that the needles of the downstream array may pass into them, and the die plates 16 and 18 are therefore offset transverse to the direction X by 0.5D.

In use, the advancing means is set to advance the strip, which is typically steel strip of 0.1 mm thickness, by a distance of 2D, and the reciprocating drive moves the two needle arrays downwards until the points of the needles are within the gaps above the reduced height portions 24 in their respective die plates and then up again between each incremental movement of the strip. When the leading end of the strip comes underneath the needles of the upstream array two rows of holes, designated 30 in Figure 4, are pierced in the strip in a square pattern. Each needle has a tapering point, and the diameter of the holes formed therefore depends on the distance by which the needles are forced through the strip. The holes formed by the upstream needles have a diameter which will be referred to as $d$, and naturally have a spacing, centre to centre, equal to that of the needles themselves, i.e. D. The strip is then advanced a distance 2D and two more rows of holes 30 are formed. This is repeated until the leading edge of the strip comes underneath the needles of the downstream array, and those needles then form further holes 32. By virtue of the fact that the two needle arrays are offset by 0.5D transverse to the direction X and by an integral multiple plus 0.5 of D in the direction X, the holes 32 are formed in the centre of the squares defined by the holes 30, thereby forming a quincunx configuration of holes.

During the perforation of each hole, the strip is supported on its underside by the upper surface of two die plates 16 and 18, one either side of the hole. The die plates may become worn or distorted with time at points adjacent where the needles enter between them, and the die bed is therefore preferably movable in the direction X so that the die plates are caused to present a different portion of their upper edge.

In the embodiment described above each needle array has two rows of needles, but it will be appreciated that this may be increased to, e.g. four rows and that this will increase the rate at which the strip is perforated.

As mentioned above the optimum value of D is 0.5 mm. When metal strip is perforated in accordance with the known method using needles from one side of the strip only to produce a pattern of holes in which each hole lies at the corner of an equilateral triangle, the maximum number of holes is 466 per square centimetre, whilst strip perforated in accordance with the present invention has 747 holes per square centimetre. Strip perforated by the conventional method, i.e. with $d$ (hole diameter) 0.25 mm has an open area of 22.7%. The following table shows the open area obtained by the method according to the present invention for differing values of $d$.

| $d$ in mm | Open area % |
|---|---|
| 0.20 | 24.14 |
| 0.215 | 28.47 |
| 0.23 | 31.81 |

Thus strip perforated in accordance with the invention may have an open area about 10 to 40% greater than that obtainable with the known method by using a conventional machine with only minor modifications and without the need for a grinding step to remove burrs on one surface. Even with a hole size of 0.20 mm a 10% increase in open area results as compared to the known method with 0.25 mm holes in conjunction with a corresponding reduction in the loss of active material.

This increased open area is reflected in the discharge current that may be obtained from an alkaline cell incorporating pocket plates made from strip perforated in accordance with the present invention when subjected to a high discharge rate test at room temperature as indicated in the table below.

|  | Amps to 1.0V | Amps to 0.85V | Amps to 0.65V |
|---|---|---|---|
| Standard cell | 29.9 | 42.4 | 59.1 |
| Cell in accordance with the invention | 34.2 | 48.5 | 67.5 |

## Claims

1. A method of perforating metal strip for use in the manufacture of pocket electrode plates for alkaline batteries including reciprocating a first array of needles (6) to pierce the strip from one side and thereby form a series of first holes (30) whilst supporting the strip from the other side adjacent the first holes and advancing the strip incrementally, characterised by reciprocating a second array of needles (6) to pierce the strip from the said one side and thereby form a series of second holes (32) whilst supporting the strip from the other said side adjacent the second holes (32), the second holes (32) being interposed amongst the first holes (30) and offset from them and formed subsequent to the formation of the first holes (30) amongst which they are interposed.

2. A method as claimed in claim 1 characterised in that the first and second arrays of needles (6) are reciprocated in synchronism.

3. A method as claimed in claim 1 or claim 2 characterised in that the first and second arrays of needles (6) are so arranged and the strip is advanced by such a distance that the first and second holes (30, 32) together form a quincunx configuration.

4. A method as claimed in any one of the preceding claims, in which during the piercing the strip is supported between adjacent holes, characterised in that the support is effected by die plates (16, 18) having a flat surface which supports the strip over an appreciable distance in the direction of its length.

5. A method as claimed in Claim 4 characterised by the step of moving the die plates (16, 18) in the direction of the length of the strip when their flat surfaces become worn.

6. A method as claimed in any one of the preceding claims characterised in that the first and second arrays of needles (6) comprise at least two parallel rows of needles (6) extending transverse to the length of the strip.

7. Apparatus for carrying out a method as claimed in any one of the preceding claims characterised by a first array of needles (6), a second array of needles (6), means (9, 15) to reciprocate the first and second arrays of needles (6), advancing means (3) to advance the strip incrementally through the apparatus and a plurality of support means (16, 18) associated with each array of needles (6) adapted, in use, to contact the strip, the apparatus being constructed and arranged so that, in use, the first array of needles (6) is reciprocated to pierce the strip from a first side and thereby form a series of first holes (30), whilst the other side of the strip is contacting the support means (16) adjacent the first holes (30), the strip is advanced and the second array of needles (6) is reciprocated to pierce the strip from the said first side and thereby form a second series of holes (32) whilst the other side of the strip is contacting the support means (18) adjacent the second holes (32), the second holes (32) being interposed amongst the first holes (30) and offset from them.

8. Apparatus as claimed in Claim 7 characterised in that the first and second arrays of needles (6) are connected to a common needle holder (11) and adapted to be reciprocated in synchronism.

9. Apparatus as claimed in Claim 7 or Claim 8 characterised in that both the first and second arrays of needles (6) comprise one or more lines of needles extending transverse to the intended direction of movement (X) of the strip, the needles (6) of the two arrays and the advancing means (3) being so arranged that, in use, the strip is formed with perforations in a quincunx configuration.

10. Apparatus as claimed in any one of Claims 7 to 9 characterised in that the support means comprises two sets of die plates (16, 18), one set being associated with each array of needles (6), and arranged to contact the strip at positions between the holes (30, 32) formed by the associated needles, the die plates (16, 18) extending in the intended direction of travel (X) of the strip and being spaced apart in a direction transverse to the said intended direction (X), the die plates (16) of one set being offset with respect to those (18) of the other set in a direction transverse to the said intended direction (X).

11. Apparatus as claimed in Claim 10 characterised in that the die plates (16, 18) have a flat surface which, in use, supports the strip over an appreciable distance in the direction of its travel (X).

12. Apparatus as claimed in Claim 10 or Claim 11 characterised in that both sets of die plates (16, 18) are arranged to be movable in the intended direction of travel of the strip.

## Patentansprüche

1. Verfahren zum Perforieren eines Metallstreifens für eine Taschenelektrodenplatte einer alkalischen Batterie, bei welchem eine erste Anordnung von Nadeln (6) hin- und herbewegt wird, um den Streifen von einer Seite her zu lochen und dadurch eine Gruppe von ersten Löchern (30) zu bilden, während der Streifen an der anderen Seite neben den Löchern unterstützt wird, und der Streifen schrittweise weitertransportiert wird, dadurch gekennzeichnet, daß eine zweite Anordnung von Nadeln (6) hin- und herbewegt wird, um den Streifen von der erwähnten einen Seien her zu lochen und dadurch eine Gruppe von zweiten Löchern (32) zu bilden, während der Streifen an der erwähnten anderen Seite neben den zweiten Löchern (32) unterstützt wird, wobei die zweiten Löcher (32) zwischen den ersten Löchern (30) angeordnet sowie bezüglich dieser versetzt sind und nach der Bildung der ersten Löcher (30) zwischen denen sie angeordnet sind, gebildet werden.

2. Verfahren nach Anspruch 1, dadurch gekennzeichnet, daß die erste und die zweite Anordnung von Nadeln (6) synchron hin- und herbewegt werden.

3. Verfahren nach Anspruch 1 oder 2, dadurch gekennzeichnet, daß die erste und die zweite Anordnung von Nadeln (6) so angeordnet sind und der Streifen eine solche Strecke weitertransportiert wird, daß die ersten und die zweiten Löcher (30, 32) zusammen eine Fünfpunkt-Konfiguration bilden.

4. Verfahren nach einem der vorhergehenden Ansprüche, bei dem der Streifen während des Lochens zwischen benachbarten Löchern unterstützt wird, dadurch gekennzeichnet, daß die Unterstützung durch Unterstempelplatten (16, 18) bewirkt wird, die eine flache Oberfläche haben, welche den Streifen über eine beträchtliche Strecke in seiner Längsrichtung unterstützt.

5. Verfahren nach Anspruch 4, gekennzeichnet durch den Verfahrensschritt, die Unterstempelplatten (16, 18) in Längsrichtung des Streifens zu bewegen, wenn ihre flachen Oberflächen abgenutzt worden sind.

6. Verfahren nach einem der vorhergehenden Ansprüche, dadurch gekennzeichnet, daß die erste und die zweite Anordnung von Nadeln (6) mindestens zwei parallele Reihen von Nadeln (6) enthalten, die sich que zur Längsrichtung des Streifens erstrecken.

7. Einrichtung zur Durchführung des Verfahrens nach einem der vorhergehenden Ansprüche, gekennzeichnet durch eine erste Anordnung von Nadeln (6), eine zweite Anordnung von Nadeln (6), eine Vorrichtung (9, 15) zum Hin- und Herbewegen der ersten und der zweiten Anordnung von Nadeln (6), eine Vorschubvorrichtung (3) zum schrittweisen Transportieren des Streifens durch die Einrichtung und eine Mehrzahl von Unterstützungsvorrichtungen (16, 18), die jeweils einer Anordnung von Nadeln (6) zugeordnet und geeignet sind, in Betrieb am Streifen anzuliegen, wobei die Einrichtung so konstruiert und ausgebildet ist, daß im Betrieb die erste Anordnung von Nadeln (6) hin- und herbewegt wird, um den Streifen von einer ersten Seite her zu lochen und dadurch eine Gruppe von ersten Löchern (30) zu bilden, während die andere Seite des Streifens an der Unterstützungsvorrichtung neben den ersten Löchern (30) anliegt, der Streifen weitertransportiert wird und die zweite Anordnung von Nadeln (6) hin- und herbewegt wird, um den Streifen von der erwähnten ersten Seite her zu lochen und dadurch eine zweite Gruppe von Löchern (32) zu bilden, während die Unterstützungsvorrichtung (18) an der anderen Seite des Streifens neben den zweiten Löchern (32) anliegt, wobei die zweiten Löcher (32) zwischen der ersten Löchern (30) angeordnet und in Bezug auf diese versetzt sind.

8. Einrichtung nach Anspruch 7, dadurch gekennzeichnet, daß die erste und die zweite Anordnung von Nadeln (6) mit einem gemeinsamen Nadelhalter (11) verbunden und synchron hin- und herbeweglich sind.

9. Einrichtung nach Anspruch 7 oder 8, dadurch gekennzeichnet, daß sowohl die erste als auch die zweite Anordnung von Nadeln (6) eine oder mehrere Reihen von Nadeln enthalten, die quer zur vorgesehenen Bewegungsrichtung (X) des Streifens verlaufen, wobei die Nadeln (6) der beiden Anordnungen und die Vorschubvorrichtung (3) so ausgebildet sind, daß der Streifen im Betrieb mit Perforationen in Form einer Fünfpunktanordnung versehen wird.

10. Einrichtung nach einem der Ansprüche 7 bis 9, dadurch gekennzeichnet, daß die Unterstützungsvorrichtung zwei Sätze von Unterstempelplatten (16, 18) enthält, die jeweils einer Anordnung von Nadeln (6) zugeordnet und für eine Berührung des Streifens an Positionen zwischen den durch die zugeordneten Nadeln gebildeten Löcher (30, 32) ausgebildet sind, daß sich die Unterstempelplatten (16, 18) in der vorgesehen Vorschubrichtung (X) des Streifens erstrecken und in einer Richtung quer zur vorgesehenen Vorschubrichtung (X) im Abstand voneinander angeordnet sind, und daß die Unterstempelplatten (16) des einen Satzes bezüglich derer (18) des anderen Satzes in einer quer zur vorgesehenen Vorschubrichtung (X) verlaufenden Richtung versetzt sind.

11. Einrichtung nach Anspruch 10, dadurch gekennzeichnet, daß die Unterstempelplatten (16, 18) eine flache Oberfläche haben, welche im Betrieb den Streifen über eine beträchtliche Strecke in seiner Vorschubrichtung (X) unterstützt.

12. Einrichtung nach Anspruch 10 oder 11, dadurch gekennzeichnet, daß die beiden Sätze von Unterstempelplatten (16, 18) in der vorgesehenen Vorschubrichtung des Streifens beweglich angeordnet sind.

**Revendications**

1. Procédé pour perforer une bande métallique destinée à être utilisée dans la fabrication de plaques d'électrodes formant des poches pour des batteries alcalines, incluant le déplacement en va-et-vient d'un premier ensemble d'aiguilles (6) de manière à perforer la bande à partir d'une première face et former de ce fait une série de premiers trous (30) tout en soutenant la bande sur son autre face, au voisinage des premiers trous et l'avance incrémentale de la bande, caractérisé par le déplacement en va-et-vient d'un second ensemble d'aiguille (6) de manière à perforer la bande à partir de ladite première face et à former de ce fait une série de seconds trous (32), tout en soutenant la bande sur sa seconde face au voisinage des seconds tours (32), ces seconds trous (32) étant interposés entre les premiers trous (30), en étant décalés par rapport à ces derniers et en étant formés à la suite de la formation des premiers trous (30), entre lesquels ils sont interposés.

2. Procédé selon la revendication 1, caractérisé en ce que les premiers et seconds ensembles d'aiguilles (5) sont déplacés en synchronisme selon un mouvement de va-et-vient.

3. Procédé selon la revendication 1 ou 2, caractérisé en ce que les premier et second ensembles d'aiguilles (6) sont agencés de telle sorte et la bande est avancée sur une distance telle que les premiers et seconds trous (30, 32) sont ensemble disposés selon une configuration en quinconce.

4. Procédé selon l'une quelconque des revendications précédentes, selon lequel lors de la perforation, la bande est soutenue entre des trous voisins, caractérisé en ce que le support est fourni par des plaques de matrice (16, 18) possédant une surface plane et qui supportent la bande sur une distance appréciable suivant sa direction longitudinale.

5. Procédé selon la revendication 4, caractérisé par la phase opératoire consistant à déplacer les plaques de matrice (16, 18) suivant la direction longitudinale de la bande, lorsque leurs surfaces planes sont usées.

6. Procédé selon l'une quelconque des revendications précédentes, caractérisé en ce que les premier et second ensembles d'aiguilles (6) comprennent au moins deux rangées parallèles d'aiguilles (6) s'étendant transversalement par rapport à la longueur de la bande.

7. Appareil pour la mise en oeuvre d'un procédé selon l'une quelconque des revendications précédentes, caractérisé par un premier ensemble d'aiguilles (6), par un second ensemble d'aiguilles (6), par des moyens (9, 15) servant à déplacer en va-et-vient les premier et second ensembles d-aiguilles (6), par des moyens d'avance (3) servant à faire avancer la bande de façon incrémentale à travers l'appareil et par une pluralité de moyens de support (16, 18) associés aux ensembles respectifs d'aiguilles (6) et aptes, en cours d'utilisation, à contacter la bande, l'appareil étant constitué et agencé de telle sorte que, en cours d'utilisation, le premier ensemble d'aiguilles (6) est déplacé en va-et-vient de manière à perforer la bande à partir d'une première face et à former de ce fait une série de premiers trous (30), tandis que l'autre face de la bande contacte des moyens de support (16) au voisinage des premiers trous (30), qu'on fait avancer la bande et que le second ensemble d'aiguilles (6) est déplacé en va-et-vient de manière à perforer la bande, à partir de ladite première face, et à former de ce fait une seconde série de trous (32), tandis que l'autre face de la bande contacte les moyens de support (18) au voisinage des seconds trous (32), ces seconds trous (32) étant interposés entre les premiers trous (30) et étant décalés par rapport à ces derniers.

8. Appareil selon la revendication 7, caractérisé en ce que les premiers et seconds ensembles d'aiguilles (6) sont raccordés à un support commun d'aiguilles (11) et peuvent être déplacés en synchronisme en va-et-vient.

9. Appareil selon la revendication 7 ou 8, caractérisé en ce qu'à la fois les premier et second ensembles d'aiguilles (6) comportent une ou plusieurs rangées d'auiguilles s'étendant transversalement par rapport à la direction prévue de déplacement (X) de la bande, les aiguilles (6) des deux réseaux et les moyens d'avance (3) étant agencés de telle sorte que, en cours d'utilisation, la bande reçoive des perforations selon une configuration en quinconce.

10. Appareil selon l'une quelconque des revendications 7 à 9, caractérisé en ce que les moyens de support comprennent deux ensembles de plaques de matrice (16, 18), un ensemble étant associé à chaque ensemble d'aiguilles (6) et étant agencé de manière à contacter la bande dans des positions situées entre les trous (30, 32) formés par les aiguilles associées, les plaques de matrice (16, 18) s'étendant suivant la direction prévue de déplacement (X) de la bande et étant écartées suivant une direction transversale par rapport à la direction prévue (X), les plaques de matrice (16) d'un ensemble étant décalées par rapport aux plaques de matrice (18) de l'autre ensemble suivant une direction transversale par rapport à ladite direction prévue (X).

11. Appareil selon la revendication 10, caractérisé en ce que les plaques de matrice (16, 18) comportent une surface plane qui, en cours d'utilisation, soutient la bande sur une distance appréciable suivant la direction de son déplacement (X).

12. Appareil selon la revendication 10 ou 11, caractérisé en ce que les deux ensembles de plaques de matrice (16, 18) sont disposées de manière à être déplaçables suivant la direction prévue de déplacement de la bande.

Fig.1.

Fig.5.

FIG.2.

FIG. 3.

FIG. 4.